# EUROPEAN PATENT SPECIFICATION

(11) **EP 3 852 676 B1**
(45) Date of publication and mention of the grant of the patent: **07.06.2023**
(21) Application number: 19766041.8
(22) Date of filing: 16.09.2019
(51) Int. Cl.: A61C 13/00

(54) **BLANK FOR PRODUCTION OF A DENTAL PROSTHESIS AND METHOD OF MANUFACTURING A DENTAL PROSTHESIS**
ROHLING ZUR HERSTELLUNG EINER ZAHNPROTHESE UND VERFAHREN ZUR HERSTELLUNG EINER ZAHNPROTHESE
ÉBAUCHE PERMETTANT LA PRODUCTION D'UNE PROTHÈSE DENTAIRE ET PROCÉDÉ DE FABRICATION D'UNE PROTHÈSE DENTAIRE

(30) Priority: 19.09.2018 LU 100935
(43) Date of publication of application: 28.07.2021
(73) Proprietor: Jade Finance S.A.R.L., 1870 Luxembourg (LU)
(72) Inventor: HORNBECK, Jacques, 1870 Luxembourg (LU)
(74) Representative: Office Freylinger
(86) International application number: PCT/EP2019/074655
(87) International publication number: WO 2020/058167

(56) References cited:
- WO-A1-03/065922
- JP-A- 2017 109 036
- US-A1- 2012 251 979
- US-A1- 2017 319 303

## Description

### Technical field

The present invention generally relates to techniques for the production of a dental prosthesis such as a crown, abutment, bridge or denture. The invention more particularly relates to an improved blank for production of a dental prosthesis, to a dental prosthesis to be used with dental implants and to method of manufacturing same.

### Background Art

Dental implants are often used when a patient requires a prosthetic device to hold one or more artificial teeth in place. Such implants are typically securely mounted to the jawbone, e.g. by surgical screws or other hygienic fixing means; and then, over a period, typically months, the bone and other tissue are permitted to grow around the implant.

Dental prostheses may also be manufactured using 3D printing. In the manufacture of dental prostheses, e.g. in metal using 3D laser printing, typically one or more bridges are formed. That is, one or more blanks or unworked/unmachined bridges are formed on the prosthesis by 3D laser printing, and then machined using an intricate machining tool while the prosthesis is on a machining jig, so as to produce the bridge (and prosthesis) in its final shape and form (e.g. conforming to the aforementioned master model). In doing so, it may be necessary for the machining to be done to a precision of the order of 1/100ths of a millimeter.

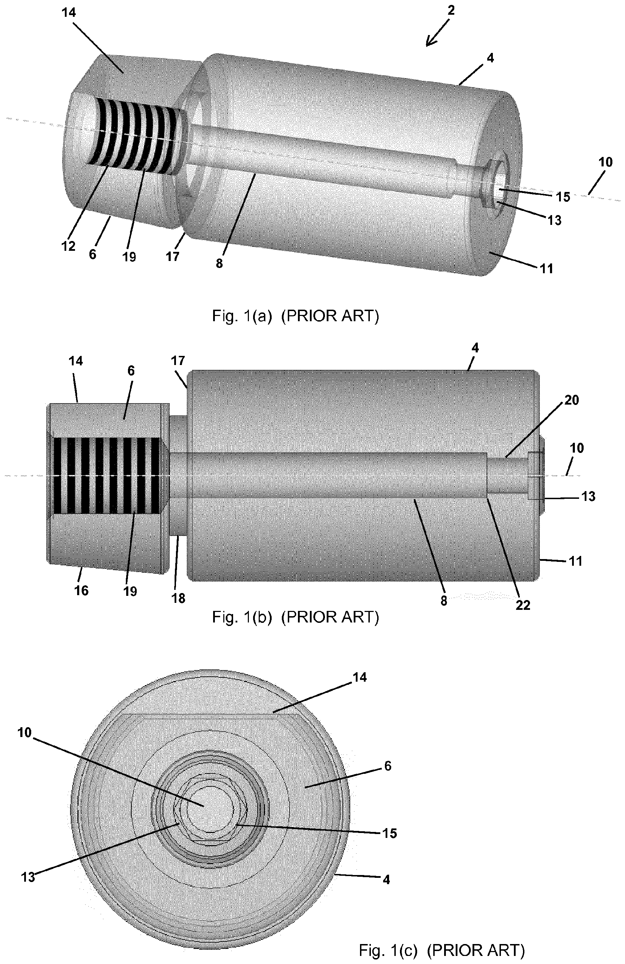

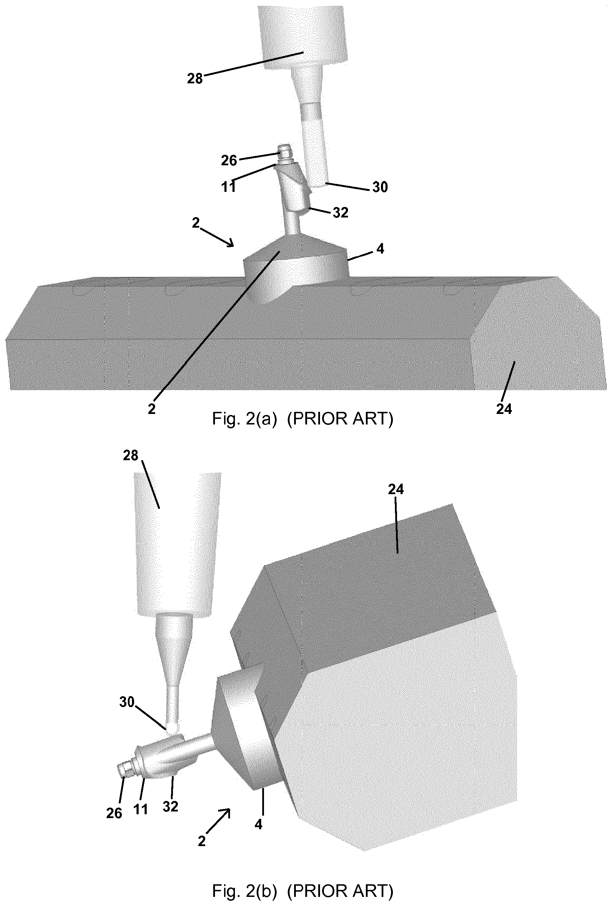

Dental prosthesis such as a crown, abutment, bridge or denture may be configured to be attached to an implant via cooperating registration/fixing elements, and it is of particular importance that such elements (e.g. recesses for receiving screws bolts or projections that are used to fix the dental prosthesis to the implant) are formed so as to be shaped and positioned with low tolerances and great precision. Further, a bore or screw channel must be formed in the dental prosthesis, as well forming the overall (outer) shape of the dental prosthesis from a blank (typically a part having a cylindrical main body portion which is milled); and the screw channel is traditionally formed axially, i.e. extending at least along the length of the main body portion to the registration/fixing elements. Such a known blank and fabrication process are illustrated in Figs 1 and 2, respectively, as will be discussed in further detail below.

US 2017/0319303 A1 describes a milling machine for producing a dental component, such as a crown or an abutment for example, from a blank. The milling machine includes a stop and a holder for the blank. The holder is designed such that the holder can be surrounded by a mounting, which surrounds the holder, of the blank, and the surrounding mounting of the blank can be brought into contact with the stop for positioning purposes.

WO03/065922 relates to a blank for the preparation of denture parts with a basic body to be worked by a material-eroding tool in a working machine and a holder connected to the basic body secure the blank in the working machine. In order to develop a blank so that it can be more easily and more precisely worked in a suitable working machine it is provided that the holder is frustoconical and tapers starting from the basic body. By this shaping of the holder, an improved conduction of force from the blank into the complementarily-shaped housing device of the working machine is guaranteed, as forces can be introduced via the casing surfaces of the frustoconical holder both in the direction of the longitudinal axis of the holder and perpendicular to it into the adjoining surfaces of the housing device. A more stable securing of the blank in the working machine is thereby made possible.

### Technical problem

A problem is that, with the known blank configuration, the registration/fixing elements but also the screw channel are formed with very low tolerances and very high precision, e.g. to a precision of the order of 1/100ths of a millimeter or less. Although it is necessary that the registration/fixing elements are formed with high precision because positioning and orientation of the dental prosthesis in the patient's mouth is critical: a slight degree of mis-positioning can allow ingress of bacteria and lead to pain, it is not necessary for the screw channel to be machined with such high precision.

However, with conventional techniques it has been necessary for the fabrication of the dental prosthesis to make the blanks - including drilling the screw channel - to be performed in specialist (manufacturer's) facilities using very high precision tools/machines. The forming of the overall (outer) individual shape of the dental prosthesis could then be performed in a dental lab which does not have such precision machining tools. Furthermore with the conventional techniques, it is possible only to make screw channels which are aligned with the registration portion i.e. in which the axis of the screw channel coincides with the axis of the registration portion. It was not possible to make a screw channel which is at an angle with regard to the registration/fixing elements.

It is an object of the present invention to provide a blank from which a dental prosthesis can be formed, a method of manufacturing a dental prosthesis, and a dental prosthesis overcoming the above problems, and therefore these techniques thereby enable at least part of the fabrication process, such as forming the screw channel and/or the overall shape from a blank using lower precision machines/tools at the dental lab of a dental practitioner, and avoid the requirement for very high precision machinery and wherein the axis of the screw channel does not coincide with the axis of the registration portion.

This object is achieved by a blank as claimed in claim 1, the method of manufacturing a dental prosthesis of claim 9.

### General Description of the Invention

In order to overcome the above-mentioned issue, the present invention provides a blank from which a dental prosthesis can be formed according to claim 1, and a method of manufacturing a dental prosthesis according to claim 8. Further embodiments are set out in the appended dependent claims.

The blank comprises a main body portion, the main body portion having an axis of elongation, a first end and a second end. The blank further comprises a registration portion at the first end, for aligning and fixing, in use, the dental prosthesis in a precise position and/or orientation on an implant. The blank further comprises an attachment portion at the second end, the attachment portion including a first bore for enabling secure attachment of the blank to a holder with a holder axis while the blank is milled and/or machined, so that the elongation axis of the blank is at an angle to the holder axis when the blank is attached to the holder, an attachment axis being defined by the first bore coinciding with the holder axis; wherein the attachment axis is at an angle to the axis of elongation.

An advantage of the invention is that it can be mounted in a holder at an angle between the holder axis and the axis of elongation of the blank such that a second bore or screw channel can be formed that is non-axial, i.e. inclined to the axis of elongation.

Another advantage of the invention as claimed is that the blanks can be used for a larger number of different abutments. Basically any blank can be used (as long as the registration portion is correct to produce a large number of abutments. The dental laboratory thus needs to stock a smaller number of different types of blanks.

Preferably, the attachment axis is at right angles to the axis of elongation.

Preferably, the attachment portion further comprises a first registration surface on a first side of the attachment portion.

In an embodiment, the attachment portion further comprises a second registration surface on a second side of the attachment portion, opposite the first side.

Preferably, the first registration surface and/or the second registration surface extend parallel to the axis of elongation.

Preferably, the thickness of the attachment portion is in the range 30-60%, more preferably 40-50%, and more preferably 45-50% of a dimension of the main body portion transverse to the axis of elongation. This does not only make the blank cheaper to produce since less material is used to produce the blank, it also makes the production of the abutment quicker since less material must be removed during the fabrication of the blank.

In embodiments, (i) the main body portion is a pre-turned component, and/or (ii) the main body portion is cylindrical or substantially cylindrical and/or (iii) the blank is often made of steel, titanium, polyetheretherketone (PEEK) or combinations thereof.

Preferably, the registration portion includes a registration recess, for example of polygonal cross-section, for engaging a registration projection on the implant.

According to another aspect of the present invention, there is provided a method of manufacturing a dental prosthesis. The method comprises: providing a blank according to the preceding paragraphs; providing a holder with a holder axis, the holder including a fixing arrangement configured to engage the attachment portion of the blank; mounting the blank to the holder so that the elongation axis of the blank is at an angle to the holder axis when the blank is attached to the holder; milling at least a portion of the outer part of the main body portion so as to form the shape of the dental prosthesis; and forming a second bore in the main body portion, the second bore and the holder axis extending at an angle of inclination to the axis of elongation of the blank.

An advantageous effect is that, for the formation of the second bore (screw channel), tolerances do not need to be extremely low and/or less precision is required, such that the screw channel can be formed (and the dental prosthesis can be completed) using low-precision tools in a dental lab.

A further advantage is that, when it comes to mounting the dental prosthesis (to an implant) in the mouth of a patient, the angle of inclination, and/or its choice of (radial) positioning, means that that there is more flexibility as to how it is mounted; and this can be beneficial for the dental practitioner when access to the particular implant is difficult or the state of the (jaw)bone in that area is imperfect.

Preferably, the angle of inclination is in the range 20-40 degrees, more preferably 25-35 degrees, more preferably 27-33 degrees, and more preferably is 30 degrees.

In embodiments, the second bore extends to the registration portion from a point on the main body portion at or near (i) the second end thereof and/or (ii) the periphery of the main body portion.

In other embodiments, a narrow section of a channel and / or an enlarged portion of a channel extend between the second bore and the registration portion. The narrow portion serves to guide the screw whereas the enlarged portion serves as shoulder for the screw head when the dental prosthesis is fixed to the implant of a patient.

In an embodiment, the main body portion has a first outer surface portion extending parallel to the axis of elongation and a second outer surface portion extending transverse to the axis of elongation; wherein the second bore extends through and edge formed by the first outer surface portion and the second outer surface portion.

Preferably, forming second bore comprises forming the second bore using a drilling tool.

Preferably, the fixing arrangement of the holder includes a third registration surface for abutting, in use, the first registration surface or the second registration surface. Preferably, mounting the blank to the holder comprises mounting the blank so that the first registration surface or the second registration surface abuts the third registration surface.

Preferably, the fixing arrangement of the holder includes a third bore having an internal thread. In embodiments, mounting the blank to the holder comprises (i) mounting the blank so that the third bore and the first bore are aligned and (ii) fixing the blank to the holder using a bolt passing through the first bore and engaging the internal thread on the third bore.

According to another aspect of the present invention there is provided a dental prosthesis obtainable by the methods of the preceding paragraphs, or as otherwise described herein.

According to another aspect of the present invention there is provided a dental prosthesis, comprising: a prosthetic portion, the prosthetic portion having an axis of elongation, a first end and a second end; a registration portion at the first end, for aligning, in use, the dental prosthesis in a precise position and/or orientation on an implant; and a channel in the prosthetic portion, the channel extending at an angle of inclination to the axis of elongation and extending to the registration portion from a point on the prosthetic portion at or near (i) the first end thereof and/or (ii) the periphery of the prosthetic portion.

Preferably, the angle of inclination is in the range 20-40 degrees, more preferably 25-35 degrees, more preferably 27-33 degrees, and more preferably is 30 degrees.

### Brief Description of the Drawings

Further details and advantages of the present invention will be apparent from the following detailed description of a not limiting embodiment with reference to the attached drawings, wherein:
Figure 1 (PRIOR ART) shows (a) a perspective view, (b) a lateral view and (c) an end (axial) view of a known blank from which a dental prosthesis can be formed;
Figure 2 (PRIOR ART) shows the blank of Fig. 1 mounted on a holder or jig during fabrication (milling) of a dental prosthesis using known techniques, (a) with the axis of elongation of the blank in a substantially vertical orientation and (b) with that axis in a substantially horizontal orientation;
Figure 3 shows a blank according to an embodiment of the invention, (a) in perspective view from above, (b) in lateral view, (c) in an end (axial) view, (d) in perspective view from below and (e) in lateral view including a projection of a second bore (screw channel);
Figure 4 shows (a) in perspective view from below, and (b) in lateral view, a blank according to an embodiment of the invention mounted on a holder during fabrication of a dental prosthesis;
Figure 5 shows part of a process for fabrication of a dental prosthesis according to an embodiment of the invention, showing (a) milling of the blank to form the outer shape of the dental prosthesis and (b) formation of a second bore (screw channel);
Figure 6 shows in enlarged views the blank at a latter stage of a process for fabrication of a dental prosthesis according to an embodiment of the invention, (a) in perspective view from above, (b) in plan view, and (c) in lateral view; and
Figure 7 shows a dental prosthesis according to an embodiment of the invention formed by the aforementioned process, (a) in lateral view and (b) in perspective view from above.

### Description of Preferred Embodiments

In the following, like reference numerals denote like parts, and any element, design feature or method step of any embodiment may be used in combination with an element, design feature or method step of any other embodiment unless stated otherwise herein.

Figure 1 (PRIOR ART) shows (a) a perspective view, (b) a lateral view and (c) an end (axial) view of a known blank 2 from which a dental prosthesis can be formed.

Referring to Fig. 1(a), the blank 2 includes a main body portion 4 and an attachment portion 6. A screw channel 8 is formed in the blank 2, i.e. extending axially with respect to an axis of elongation 10 of the blank 2. The blank may be made of steel or titanium or polyetheretherketone (PEEK) or combinations thereof and fabricated using turning and/or machining, whereby the main body portion 4 has a cylindrical form. The blank 2 must be formed with very high precision, very low tolerance manufacturing but can be made in large numbers and used in a large number of different dental prosthesis.

At a first end 11 of the main body portion 4 is provided a registration portion 13, for example including a registration recess 15 of polygonal cross-section. It is important to note that it is the registration portion 13 of the blank 2 must be formed with very high precision, very low tolerance manufacturing since it is by this registration portion that the dental prosthesis will be fixed to the implant in the jaw of the patient. If this registration portion does not fit perfectly, bacteria can infest the implant and/or the implant could become loose overtime.

At a second end 17 of the main body portion 4 is provided the attachment portion 6. To assist with mounting, registration and/or fixing in a holder or jig (not shown) during the fabrication process for forming the dental prosthesis from the blank 2, the attachment portion 6 includes an internal bore 12 having an internal thread 19 and a flat first registration surface 14.

As seen in Fig. 1(b), the attachment portion 6 is formed integrally with the main body portion 4 and linked thereto via link portion 18 of smaller diameter than each of the main body portion 4 and the attachment portion 6. Also, the internal bore 19 has a larger diameter than that of the screw channel 8. To further assist with mounting, registration and/or fining in a holder or jig, the attachment portion 6 includes an outer surface 16 of cylindrical cross-section.

The screw channel 8 includes, at or near the registration portion 13, a narrow section 20 of reduced diameter relative to the rest of the screw channel 8, thereby defining a shoulder 22 for abutting a correspondingly shaped portion of a screw or bolt when the eventual dental prosthesis is fixed to an implant (not shown).

As seen in Fig. 1(c), the registration portion 13 includes a registration recess 15 of hexagonal cross-section. This is to be formed with very high precision, very low tolerance manufacturing.

A problem with the blank of Fig. 1 is that it has been necessary for the process for the fabrication of the blank - including forming the registration portion and drilling the screw channel 8 to be performed in specialist (manufacturer's) facilities using very high precision tools/machines. In such a process it is only possible to drill the screw channel parallel to the longitudinal axis of the blank. The screw channel cannot be drilled in the dental lab when the overall outer shape of the dental prosthesis is formed since the diameter of the screw channel is wider that the diameter of the narrow section.

The blanks are made in large numbers in "a one size fits all", i.e. the philosophy, the registration portion 13 and drilling the screw channel 8 are always the same.

Figure 2 (PRIOR ART) shows the blank of Fig. 1 mounted on a holder or jig during fabrication (milling) of a dental prosthesis using known techniques, (a) with the axis of elongation of the blank in a substantially vertical orientation and (b) with that axis in a substantially horizontal orientation.

As seen in Fig. 2(a), the blank 2 is mounted in holder (e.g. a jig) 24, i.e. with the attachment portion (not shown) inserted into a correspondingly shaped recess (not shown) within the holder 24.

A bolt 26 passing through the first bore 8 may be used to hold the blank 2 in position on the holder 24. (Alternatively, a nut (not shown) may be used in place of bolt 26, the nut engaging a bolt (not shown) passing through the first bore 8 from below, inside the holder 24.)

A milling tool 28 including a milling tip 30 is used and, during the fabrication process, acts on the outer surface of the blank 2, i.e. the main body portion 4, so as to form the overall shape of the individual dental prosthesis 32.

The holder 24 and blank 2 may be moved to the orientation shown in Fig. 2(b) to facilitate milling of parts of the main body portion 4 distal to the first end 11 of the main body portion 4.

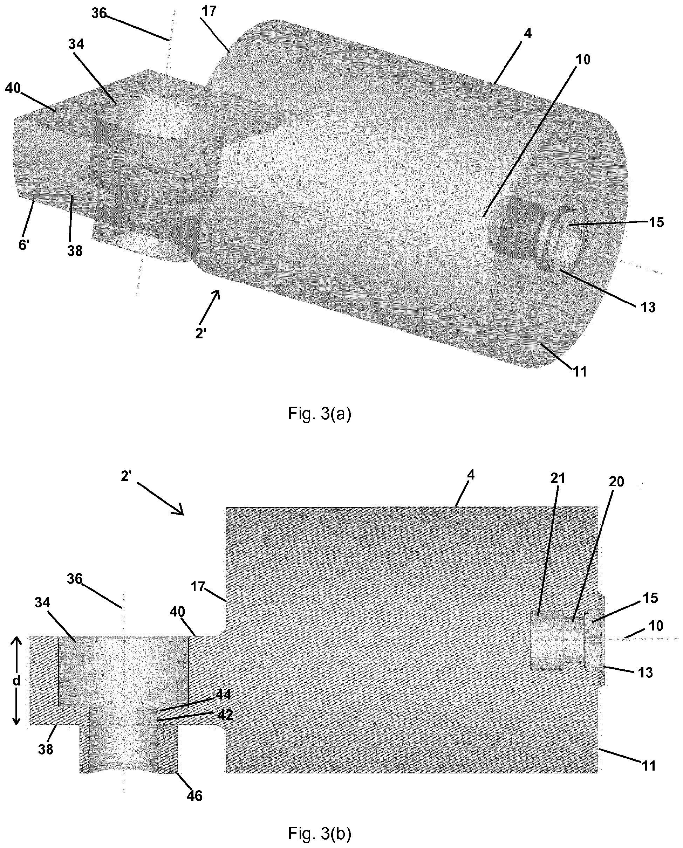

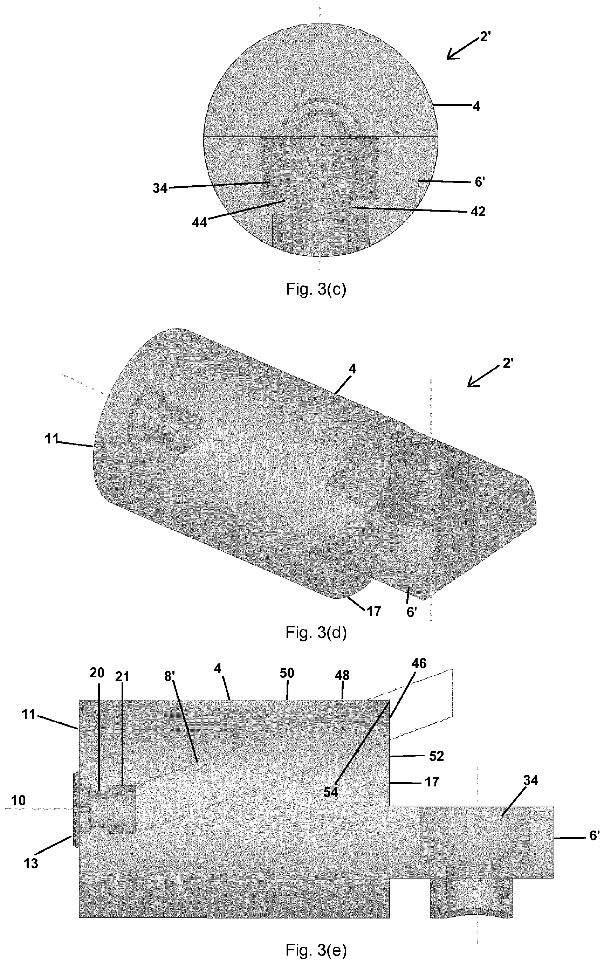

Figure 3 shows a blank 2' according to an embodiment of the invention, (a) in perspective view from above, (b) in lateral view, (c) in an end (axial) view, (d) in perspective view from below and (e) in lateral view including a projection of a second bore (screw channel) 8.

The blank 2' has a main body portion 4 in the same form as that of Fig. 1, the main body portion 4 having an axis of elongation 10, a first end 11 and a second end 17. A registration portion 13 is provided at the first end 11, for aligning, in use, the eventual dental prosthesis in a precise position and/or orientation on an implant (not shown). At or near the registration portion 13, there is a narrow section 20 of a reduced diameter - this narrow section 20 is adapted to the diameter of the screw or bolt - followed by an enlarged section 21 - with a diameter adapted to the screw head or the second bore 8'. Said enlarged section 21 defining a shoulder 22 for abutting a correspondingly shaped portion of a screw or bolt when the eventual dental prosthesis is fixed to an implant (not shown). Although it is not crucial that these two sections need to be machined with low tolerances, it is important that the shoulder is precisely orthogonal to the narrow section 20 so that the screw or bolt can be solidly tightened against the shoulder 22 when the dental prosthesis is eventually fixed to an implant.

According to the invention, a different form of attachment portion 6' is provided at the second end 17. Here, the attachment portion 6' includes a first bore 34 for enabling secure attachment of the blank 2' to a holder (not shown) while the blank 2' is milled and/or machined during said machining, an attachment axis 36 being defined by the first bore 34. The attachment axis 36 is at an angle to the axis of elongation 10.

In a preferred embodiment, the attachment axis 36 is at right angles to the axis of elongation 10.

As best seen in Fig. 3(b), the attachment portion 6' preferably further comprises a first registration surface 38 on a first side of the attachment portion 6' and/or a second registration surface 40 on a second side of the attachment portion 6', opposite the first side.

In this embodiment, the first registration surface 38 and/or the second registration surface 40 extend parallel to the axis of elongation 10.

In embodiments, the thickness d of the attachment portion is in the range 30-60%, more preferably 40-50%, and more preferably 45-50% of a dimension (e.g. diameter) of the main body portion 4 transverse to the axis of elongation 10.

In one embodiment, the main body portion 4 is a pre-turned component. In an embodiment, the main body portion 4 is cylindrical or substantially cylindrical. In an embodiment, the blank is made of steel or titanium or polyetheretherketone (PEEK) or combinations thereof.

In an embodiment, the registration portion 13 includes a registration recess 15, for example of polygonal cross-section, for engaging a registration projection (not shown) on the implant (not shown).

As best seen in Figs 3(b) and 3(c), the first bore 34 may include a narrowed portion 42 or reduced diameter, thereby defining a shoulder 44 for engaging a corresponding part (not shown) of a bolt (not shown) used to fix the attachment portion 6' to a holder (not shown), as will be described further below.

Referring to Fig. 3(e), this shows (partly by projection), where a second bore (screw channel) 8' is formed in the blank 2'. According to the invention, the second bore is formed in the main body portion 4 so that the second bore 8' extends at an angle of inclination to the axis of elongation 10. The angle of inclination may be in the range 20-40 degrees, more preferably 25-35 degrees, more preferably 27-33 degrees, and more preferably is 30 degrees.

In embodiments, the second bore 8' extends to the registration portion 13 from a point (generally designated 46) on the main body portion 4 at or near (i) the second end thereof and/or (ii) the periphery 48 of the main body portion 4. It is thus now possible to form the second bore 8' at an angle with regard to the axis of elongation. This makes it easier for the dentist to fasten the dental prosthesis to the implant in the jaw of the patient. Indeed, the screw channel can be slanted / tilted with regard to the axis of the implant so that the dentist does not have to insert the screw "vertically". The dentist has thus more room to manoeuver in the mouth of the patient.

Furthermore it makes it now easily possible to implant the screws into the jaw of a patient at various angles. As the jawbone of the patient may not always homogenous, it may be better to implant the screw in a "tilted" angle and so insert the screw where there is more / healthier bone material. Since screws do not have to be implanted "vertically" in the jaw bone of the patient

In an embodiment, the main body portion 4 has a first outer surface portion 50 extending parallel to the axis of elongation 10 and a second outer surface portion 52 extending transverse to the axis of elongation 10; and the second bore 8' extends through an edge 54 formed by the first outer surface portion 50 and the second outer surface portion 52.

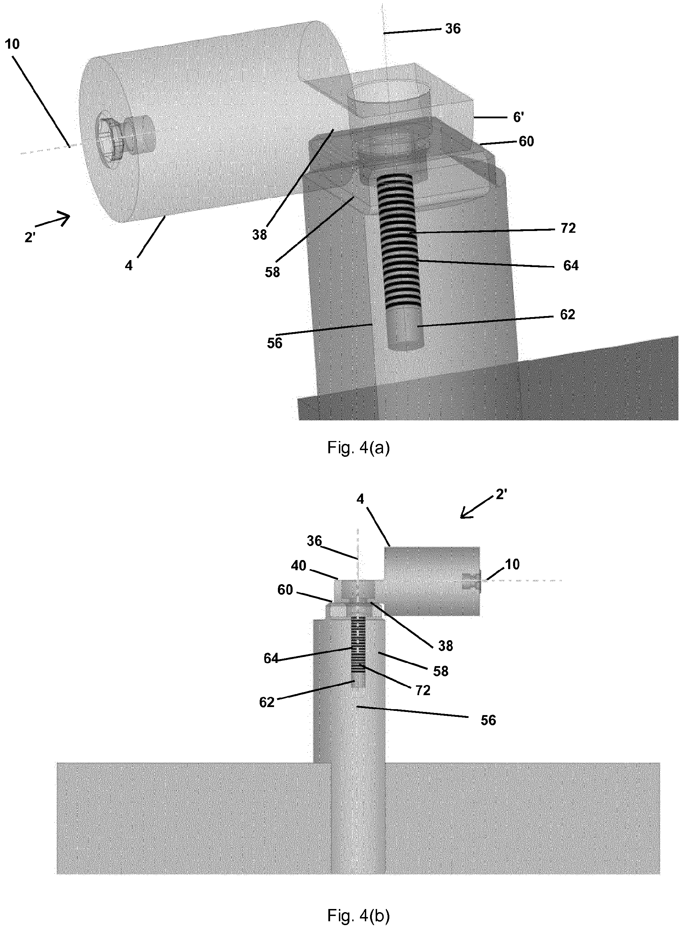

Figure 4 shows (a) in perspective view from below, and (b) in lateral view, a blank 2' according to an embodiment of the invention mounted on a holder 56 during fabrication of a dental prosthesis 32. The holder 56 includes a fixing arrangement 58 configured to engage the attachment portion 6' of the blank 2'.

In an embodiment, the fixing arrangement 58 of the holder 56 includes a third registration surface 60 for abutting, in use, the first registration surface 38 or the second registration surface 40.

In an embodiment, the fixing arrangement 58 of the holder 56 includes a third bore 62 having an internal thread 64.

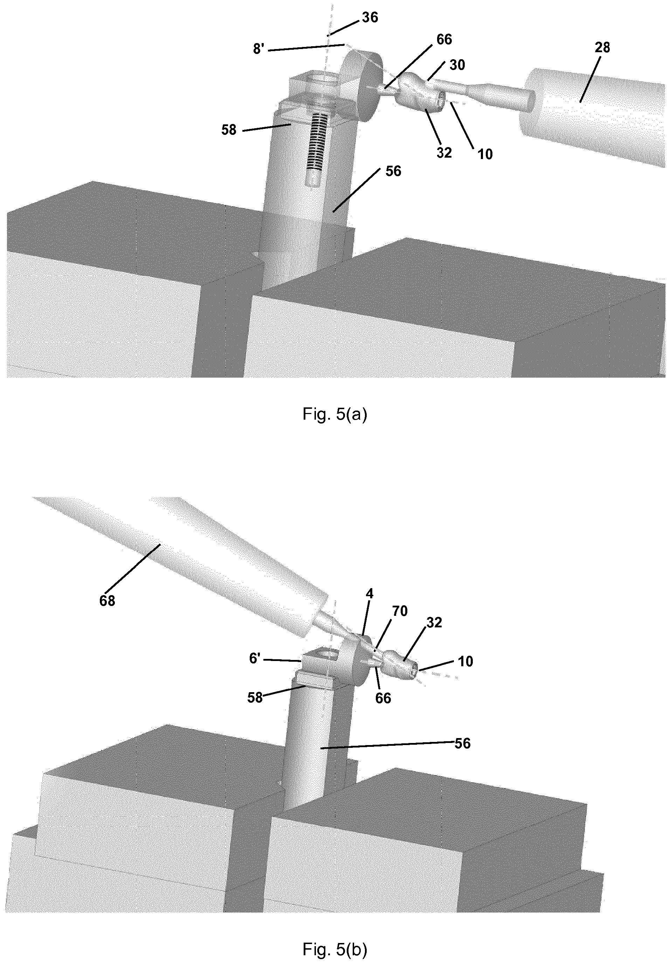

Figure 5 shows part of a process for fabrication of a dental prosthesis 32 according to an embodiment of the invention, showing (a) milling of the blank 2' to form the outer shape of the dental prosthesis 32 and (b) formation of a second bore 8' (screw channel).

More particularly, in accordance with the invention, a method of manufacturing a dental prosthesis 32 comprises providing a blank 2' as described above, and providing the holder, the holder 56 including the fixing arrangement 58 configured to engage the attachment portion 6' of the blank 2'.

Next, the blank 2' is mounted to the holder 56. In an embodiment, mounting the blank 2' to the holder 56 comprises mounting the blank 2' so that the first registration surface 38 or the second registration surface 40 abuts the third registration surface 60. In an embodiment, mounting the blank 2' to the holder 56 comprises (i) mounting the blank 2' so that the third bore 62 and the first bore 36 are aligned and (ii) fixing the blank 2' to the holder 56 using a bolt (72; Fig 4) passing through the first bore 36 and engaging the internal thread 64 on the third bore 62.

Next, at least a portion of the outer part of the main body portion 4 is milled (Fig. 5(a)) so as to form the shape of the dental prosthesis 32. The milling may be done using a milling tool 28 having a milling tip 30. The milling may be done such that the dental prosthesis 32 is attached to the rest of the blank 2' by a support part 66, from which the dental prosthesis 32 can later be removed.

Either prior to or after performing the milling, the second bore 8' is formed (Fig. 5(b)) in the main body portion 4, the second bore 8' extending at an angle of inclination to the axis of elongation 10. The second bore 8' may be formed using a drilling tool 68 having a drilling tip 70. It must be noted that the second bore 8' can be formed at various angles with regard to the axis of elongation

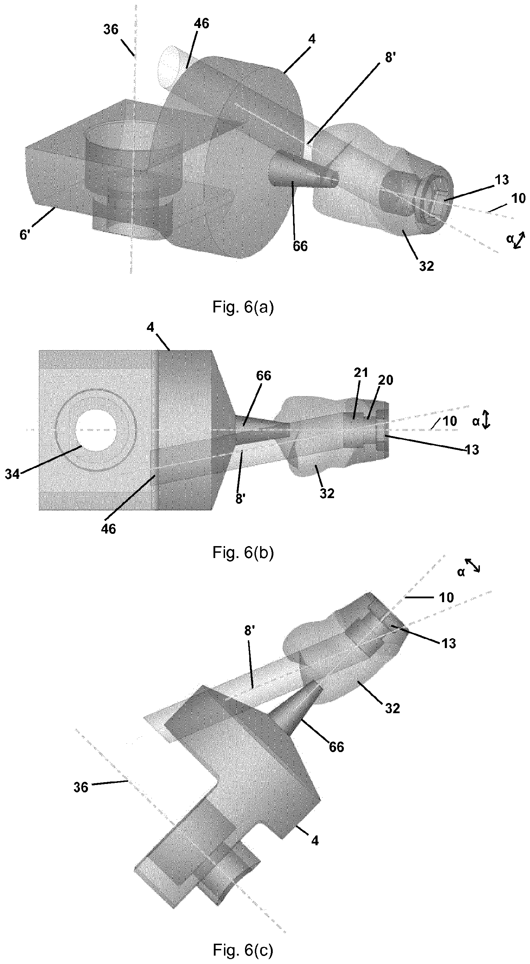

Figure 6 shows in enlarged views the blank at a latter stage of a process for fabrication of a dental prosthesis 32 according to an embodiment of the invention, (a) in perspective view from above, (b) in plan view, and (c) in lateral view.

As seen in Fig. 5(b) and Figs 6(a) to 6(c), the angle of inclination α is in the range 20-40 degrees, more preferably 25-35 degrees, more preferably 27-33 degrees, and more preferably is 30 degrees.

In an embodiment, the second bore 8' extends to the registration portion 13 from a point 46 on the main body portion 4 at or near (i) the second end 17 thereof and/or (ii) the periphery 48 of the main body portion 4.

In an embodiment, the main body portion 4 has a first outer surface portion 50 extending parallel to the axis of elongation 10 and a second outer surface portion 52 extending transverse to the axis of elongation 10; and the second bore 8' extends through an edge 54 formed by the first outer surface portion 50 and the second outer surface portion 52.

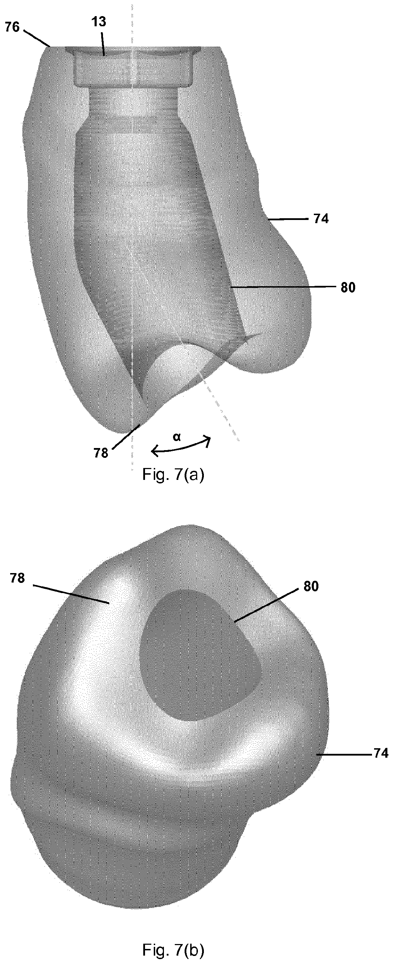

Figure 7 shows a dental prosthesis 32 according to an embodiment of the invention formed by the aforementioned process, (a) in lateral view and (b) in perspective view from above.

The dental prosthesis comprises a prosthetic portion 74, the prosthetic portion 74 having an axis of elongation, a first end 76 and a second end 78. A registration portion 13 is disposed at the first end 76, for aligning, in use, the dental prosthesis 32 in a precise position and/or orientation on an implant (not shown). A channel 80 is disposed in the prosthetic portion 74, the channel 80 extending at an angle of inclination to the axis of elongation and extending to the registration portion 13 from a point on the prosthetic portion 74 at or near (i) the first end thereof and/or (ii) the periphery of the prosthetic portion 74.

In an embodiment, the channel is formed by a portion of the second bore 8' in the vicinity of, or closest to, the registration portion 13.

In an embodiment, the angle of inclination is in the range 20-40 degrees, more preferably 25-35 degrees, more preferably 27-33 degrees, and more preferably is 30 degrees.

While embodiments have been described by reference to embodiments of survey devices having various components in their respective implementations, it will be appreciated that other embodiments make use of other combinations and permutations of these and other components.

It must be noted that the examples concern a blank for an individual crown (for one tooth). It is clear for those skilled in the art that a similar blank can be used to manufacture a bridge or a denture comprising several different second bores in different positions so that the crown or denture can be fixed to two or more implants. In such case it is extremely interesting to be able to have channels at different angles through which the screws are fixed to the individual implants.

**Legend:**

| | | | |
|---|---|---|---|
| 2 | Blank | 44 | shoulder |
| 2' | Blank | 46 | point |
| 4 | main body portion | 48 | periphery |
| 6 | attachment portion | 50 | first outer surface portion |
| 6' | attachment portion | 52 | second outer surface portion |
| 8 | screw channel | 54 | edge |
| 10 | axis of elongation | 56 | holder |
| 11 | first end | 58 | fixing arrangement |
| 12 | Internal bore | 60 | third registration surface |
| 13 | registration portion | 62 | third bore |
| 14 | first registration surface | 64 | internal thread |
| 15 | Registration recess | 66 | support part |
| 16 | outer surface | 68 | drilling tool |
| 17 | second end | 70 | drilling tip |
| 15 | Upper part | 74 | prosthetic portion |
| 16 | Upper surface | 76 | first end |
| 17 | Registration portion | 78 | second end |
| 18 | link portion | 80 | channel |
| 19 | internal thread | | |
| 20 | narrow section | | |
| 21 | Enlarged section | | |
| 22 | shoulder | | |
| 24 | holder | | |
| 26 | bolt | | |
| 28 | milling tool | | |
| 30 | milling tip | | |
| 32 | dental prosthesis | | |
| 34 | first bore | | |
| 36 | attachment axis | | |
| 38 | first registration surface | | |
| 40 | second registration surface | | |
| 42 | narrowed portion | | |

## Claims

1. A blank (2') from which a dental prosthesis (32) can be formed, the blank (2') comprising:
• a main body portion (4), the main body portion having an axis of elongation (10), a first end (11) and a second end (17);
• a registration portion (13) at the first end (11), for aligning, in use, the dental prosthesis (32) in a precise position and/or orientation on an implant; and
• an attachment portion (6') at the second end (17), the attachment portion including a first bore (34) having an attachment axis (36) defined by the first bore (34)
wherein the attachment axis (36) is at an angle to the axis of elongation (10) so that the axis of elongation (10) of the blank (2') is at an angle to the holder axis and wherein the attachment axis (36) is at right angles to the axis of elongation (10).

2. The blank according to claim 1, wherein the attachment portion (6') further comprises a first registration surface (38) on a first side of the attachment portion (6').

3. The blank according to claim 2, wherein the attachment portion (6') further comprises a second registration surface (40) on a second side of the attachment portion (6'), opposite the first side.

4. The blank according to any of claims 2 or 3, wherein the first registration surface (38) and/or the second registration surface (40) extend parallel to the axis of elongation (10).

5. The blank according to any one of the preceding claims, wherein the thickness of the attachment portion (6') is in the range 30-60%, more preferably 40-50%, and more preferably 45-50% of a dimension of the main body portion (4) transverse to the axis of elongation (10).

6. The blank according to any one of the preceding claims, wherein (i) the main body portion (4) is a pre-turned component, and/or (ii) the main body portion (4) is cylindrical or substantially cylindrical and/or (iii) the blank (2') is made of steel or titanium or polyetheretherketone (PEEK) or combinations thereof..

7. The blank according to any one of the preceding claims, wherein the registration portion (13) includes a registration recess (15), for example of polygonal cross-section, for engaging a registration projection on the implant.

8. A method of manufacturing a dental prosthesis (32), comprising:
providing a blank (2') according to any of the preceding claims;
providing a holder (56) with a holder axis, the holder including a fixing arrangement (58) configured to engage the attachment portion (6') of the blank (2');
mounting the blank (2') to the holder (56) so that the elongation axis of the blank is at right angles to the holder axis when the blank (2') is attached to the holder (56);
milling at least a portion of the outer part of the main body portion (4) so as to form the shape of the dental prosthesis (32); and
forming a second bore (8') in the main body portion (4), the second bore and the holder axis extending at an angle of inclination (α) to the axis of elongation (10) of the blank (2') and wherein the angle of inclination (α) is in the range 20-40 degrees, more preferably 25-35 degrees, more preferably 27-33 degrees, and more preferably is 30 degrees.

9. The method according to claim 8, wherein the second bore (8') extends to the registration portion (13) from a point (46) on the main body portion (4) at or near (i) the second end (17) thereof and/or (ii) the periphery (48) of the main body portion (4).

10. The method according to any of claims 8 to 9, wherein the main body portion (4) has a first outer surface portion (50) extending parallel to the axis of elongation (10) and a second outer surface portion (52) extending transverse to the axis of elongation (10); wherein the second bore (8') extends through and edge (54) formed by the first outer surface portion (50) and the second outer surface portion (52).

11. The method according to any of claims 8 to 10, wherein forming the second bore (8') comprises forming the second bore using a drilling tool.

12. The method according to any of claims 8 to 11, wherein the fixing arrangement (58) of the holder includes a third registration surface (60) for abutting, in use, the first registration surface (38) or the second registration surface (40).

13. The method according to claim 12, wherein mounting the blank (2') to the holder (56) comprises mounting the blank so that the first registration surface (38) or the second registration surface (40) abuts the third registration surface (60).

14. The method according to any of claims 8 to 13, wherein the fixing arrangement (58) of the holder (56) includes a third bore (62) having an internal thread (64).

15. The method according to claim 14, wherein mounting the blank (2') to the holder (56) comprises (i) mounting the blank (2') so that the third bore (62) and the first bore (34) are aligned and (ii) fixing the blank (2') to the holder (56) using a bolt (72) passing through the first bore (34) and engaging the internal thread (64) on the third bore (62).

## Patentansprüche

1. Rohling (2'), aus dem ein Zahnersatzteil (32) gebildet werden kann, wobei der Rohling (2') Folgendes umfasst:
- einen Hauptkörperabschnitt (4), wobei der Hauptkörperabschnitt eine Verlängerungsachse (10), ein erstes Ende (11) und ein zweites Ende (17) aufweist;
- einen Peilungsabschnitt (13) an dem ersten Ende (11) zum Ausrichten des Zahnersatzteils (32) im Gebrauch in einer genauen Position und/oder zum Ausrichten auf einem Implantat, und
- einen Halterungsabschnitt (6`) an dem zweiten Ende (17), wobei der Halterungsabschnitt eine erste Bohrung (34) mit einer Halterungsachse (36) einschließt, die durch die erste Bohrung (34) definiert ist,
wobei die Halterungsachse (36) derart in einem Winkel zu der Verlängerungsachse (10) steht, dass die Verlängerungsachse (10) des Rohlings (2') in einem Winkel zu der Halterachse steht, und wobei die Halterungsachse (36) im rechten Winkel zu der Verlängerungsachse (10) steht.

2. Rohling nach Anspruch 1, wobei der Halterungsabschnitt (6') ferner eine erste Peilungsoberfläche (38) auf einer ersten Seite des Halterungsabschnitts (6') umfasst.

3. Rohling nach Anspruch 2, wobei der Halterungsabschnitt (6') ferner eine zweite Peilungsoberfläche (40) auf einer zweiten Seite des Halterungsabschnitts (6') gegenüber der ersten Seite umfasst.

4. Rohling nach einem der Ansprüche 2 oder 3, wobei die erste Peilungsoberfläche (38) und/oder die zweite Peilungsoberfläche (40) sich parallel zu der Verlängerungsachse (10) erstreckt.

5. Rohling nach einem der vorhergehenden Ansprüche, wobei die Dicke des Halterungsabschnitts (6') im Bereich von 30 bis 60 %, stärker bevorzugt 40 bis 50 % und noch stärker bevorzugt 45 bis 50 % einer Abmessung des Hauptkörperabschnitts (4) quer zu der Verlängerungsachse (10) liegt.

6. Rohling nach einem der vorhergehenden Ansprüche, wobei (i) der Hauptkörperabschnitt (4) eine vorgedrehte Komponente ist und/oder (ii) der Hauptkörperabschnitt (4) zylindrisch oder im Wesentlichen zylindrisch ist und/oder (iii) der Rohling (2') aus Stahl oder Titan oder Polyetheretherketon (PEEK) oder Kombinationen davon gefertigt ist.

7. Rohling nach einem der vorhergehenden Ansprüche, wobei der Peilungsabschnitt (13) eine Peilungsausnehmung (15), zum Beispiel mit einem polygonalen Querschnitt, zum Eingriff in einen Peilungsvorsprung auf dem Implantat einschließt.

8. Verfahren zum Herstellen eines Zahnersatzteils (32), umfassend:
Bereitstellen eines Rohlings (2') nach einem der vorhergehenden Ansprüche;
Bereitstellen eines Halters (56) mit einer Halterachse, wobei der Halter eine Befestigungsanordnung (58) einschließt, die dafür konfiguriert ist, in den Halterungsabschnitt (6') des Rohlings (2') einzugreifen,
Montieren des Rohlings (2') an dem Halter (58), so dass die Verlängerungsachse des Rohlings im rechten Winkel zu der Halterachse steht, wenn der Rohling (2') an dem Halter (56) angebracht ist;
Fräsen zumindest eines Abschnitts des äußeren Teils des Hauptkörperabschnitts (4), um die Form des Zahnersatzteils (32) zu bilden; und
Bilden einer zweiten Bohrung (8') in dem Hauptkörperabschnitt (4), wobei sich die zweite Bohrung und die Halterachse in einem Neigungswinkel (α) zu der Verlängerungsachse (10) des Rohlings (2`) erstrecken und wobei der Neigungswinkel (α) im Bereich von 20 bis 40 Grad, stärker bevorzugt 25 bis 35 Grad, stärker bevorzugt 27 bis 33 Grad liegt und noch stärker bevorzugt 30 Grad beträgt.

9. Verfahren nach Anspruch 8, wobei sich die zweite Bohrung (8') von einem Punkt (46) auf dem Hauptkörperabschnitt (4) an oder nahe (i) dem zweiten Ende (17) von diesem und/oder (ii) dem Umfang (48) des Hauptkörperabschnitts (4) zum Peilungsabschnitt (13) erstreckt.

10. Verfahren nach einem der Ansprüche 8 bis 9, wobei der Hauptkörperabschnitt (4) einen äußeren Oberflächenabschnitt (50), der sich parallel zu der Verlängerungsachse (10) erstreckt, und einen zweiten äußeren Oberflächenabschnitt (52), der sich quer zu der Verlängerungsachse (10) erstreckt, aufweist; wobei sich die zweite Bohrung (8') durch eine Kante (54) erstreckt, die durch den ersten äußeren Oberflächenabschnitt (50) und den zweiten äußeren Oberflächenabschnitt (52) gebildet ist.

11. Verfahren nach einem der Ansprüche 8 bis 10, wobei das Bilden der zweiten Bohrung (8') das Bilden der zweiten Bohrung unter Verwendung eines Bohrwerkzeugs umfasst.

12. Verfahren nach einem der Ansprüche 8 bis 11, wobei die Befestigungsanordnung (58) des Halters eine dritte Peilungsoberfläche (60) zum Anlegen der ersten Peilungsoberfläche (38) oder der zweiten Peilungsoberfläche (40) im Gebrauch einschließt.

13. Verfahren nach Anspruch 12, wobei das Montieren des Rohlings (2') an dem Halter (56) das Montieren des Rohlings derart umfasst, dass die erste Peilungsoberfläche (38) oder die zweite Peilungsoberfläche (40) an der dritten Peilungsoberfläche (60) anliegt.

14. Verfahren nach einem der Ansprüche 8 bis 13, wobei die Befestigungsanordnung (58) des Halters (56) eine dritte Bohrung (62) mit einem Innengewinde (64) einschließt.

15. Verfahren nach Anspruch 14, wobei das Montieren des Rohlings (2') an dem Halter (56) (i) das Montieren des Rohlings (2') derart, dass die dritte Bohrung (62) und die erste Bohrung (34) ausgerichtet sind, und (ii) das Befestigen des Rohlings (2') an dem Halter (56) unter Verwendung eines Bolzens (72) umfasst, der durch die erste Bohrung (34) hindurch geht und in das Innengewinde (64) auf der dritten Bohrung (62) eingreift.

## Revendications

1. Ébauche (2') à partir de laquelle une prothèse dentaire (32) peut être formée, l'ébauche (2') comprenant :
• une partie corps principal (4), la partie corps principal ayant un axe d'allongement (10), une première extrémité (11) et une seconde extrémité (17) ;
• une partie de repérage (13) au niveau de la première extrémité (11) pour aligner, à l'utilisation, la prothèse dentaire (32) dans une position et/ou une orientation précise sur un implant ; et
• une partie de fixation (6') au niveau de la seconde extrémité (17), la partie de fixation comprenant un premier alésage (34) ayant un axe de fixation (36) défini par le premier alésage (34) ;
dans laquelle l'axe de fixation (36) fait un angle avec l'axe d'allongement (10) de sorte que l'axe de l'allongement (10) de l'ébauche (2') fait un angle avec l'axe du support et dans laquelle l'axe de fixation (36) est perpendiculaire à l'axe d'allongement (10).

2. Ébauche selon la revendication 1, dans laquelle la partie de fixation (6') comprend en outre une première surface de repérage (38) sur un premier côté de la partie de fixation (6').

3. Ébauche selon la revendication 2, dans laquelle la partie de fixation (6') comprend en outre une seconde surface de repérage (40) sur un second côté de la partie de fixation (6'), opposé au premier côté.

4. Ébauche selon l'une quelconque des revendications 2 ou 3, dans laquelle la première surface de repérage (38) et/ou la seconde surface de repérage (40) s'étend parallèlement à l'axe d'allongement (10).

5. Ébauche selon l'une quelconque des revendications précédentes, dans laquelle l'épaisseur de la partie de fixation (6') est comprise entre 30 et 60 %, de préférence entre 40 et 50 %, et de préférence entre 45 et 50 % d'une dimension de la partie corps principal (4) transversale à l'axe d'allongement (10).

6. Ébauche selon l'une quelconque des revendications précédentes, dans laquelle (i) la partie corps principal (4) est un composant pré-tourné, et/ou (ii) la partie corps principal (4) est cylindrique ou sensiblement cylindrique, et/ou (iii) l'ébauche (2') est en acier ou en titane ou en polyétheréthercétone (PEEK) ou en une combinaison de ceux-ci.

7. Ébauche selon l'une quelconque des revendications précédentes, dans laquelle la partie de repérage (13) comprend un évidement de repérage (15), par exemple de section transversale polygonale, pour mettre en prise une saillie de repérage sur l'implant.

8. Procédé de fabrication d'une prothèse dentaire (32) comprenant :
la fourniture d'une ébauche (2') selon l'une quelconque des revendications précédentes ;
la fourniture d'un support (56) avec un axe de support, le support comprenant un agencement de fixation (58) conçu pour venir en prise avec la partie de fixation (6') de l'ébauche (2') ;
le montage de l'ébauche (2') sur le support (56) de sorte que l'axe d'allongement de l'ébauche soit perpendiculaire à l'axe du support lorsque l'ébauche (2') est fixée au support (56) ;
le fraisage d'au moins une partie de la partie externe de la partie corps principal (4) de manière à façonner la forme de la prothèse dentaire (32) ; et
la formation d'un deuxième alésage (8') dans la partie corps principal (4), le deuxième alésage et l'axe de support s'étendent selon un angle d'inclinaison (α) par rapport à l'axe d'allongement (10) de l'ébauche (2') et dans lequel l'angle d'inclinaison (α) est compris entre 20 et 40 degrés, de préférence entre 25 et 35 degrés, de préférence entre 27 et 33 degrés, et est de préférence de 30 degrés.

9. Procédé selon la revendication 8, dans lequel le deuxième alésage (8') s'étend jusqu'à la partie de repérage (13) à partir d'un point (46) situé sur la partie corps principal (4) au niveau ou à proximité (i) de sa seconde extrémité (17) et/ou (ii) de la périphérie (48) de la partie corps principal (4).

10. Procédé selon l'une quelconque des revendications 8 à 9, dans lequel la partie corps principal (4) présente une première partie de surface externe (50) s'étendant parallèlement à l'axe d'allongement (10) et une seconde partie de surface externe (52) s'étendant transversalement à l'axe d'allongement (10) ; dans lequel le deuxième alésage (8') s'étend à travers un bord (54) formé par la première partie de surface externe (50) et la seconde partie de surface externe (52).

11. Procédé selon l'une quelconque des revendications 8 à 10, dans lequel la formation du deuxième alésage (8') comprend la formation du deuxième alésage à l'aide d'un outil de forage.

12. Procédé selon l'une quelconque des revendications 8 à 11, dans lequel l'agencement de fixation (58) du support comprend une troisième surface de repérage (60) destinée à venir en butée, à l'utilisation, avec la première surface de repérage (38) ou la seconde surface de repérage (40).

13. Procédé selon la revendication 12, dans lequel le montage de l'ébauche (2') sur le support (56) comprend le montage de l'ébauche de sorte que la première surface de repérage (38) ou la seconde surface de repérage (40) soit en butée contre la troisième surface de repérage (60).

14. Procédé selon l'une quelconque des revendications 8 à 13, dans lequel l'agencement de fixation (58) du support (56) comprend un troisième alésage (62) ayant un filetage interne (64).

15. Procédé selon la revendication 14, dans lequel le montage de l'ébauche (2') sur le support (56) comprend (i) le montage de l'ébauche (2') de sorte que le troisième alésage (62) et le premier alésage (34) soient alignés et (ii) la fixation de l'ébauche (2') au support (56) à l'aide d'un boulon (72) traversant le premier alésage (34) et venant en prise avec le filetage interne (64) sur le troisième alésage (62).
